# EUROPEAN PATENT APPLICATION

(11) **EP 3 057 208 A1**
(43) Date of publication of application: **17.08.2016**
(21) Application number: 16152947.4
(22) Date of filing: 27.01.2016
(51) Int. Cl.: H02K 21/46, H02K 1/27

(54) **SYNCHRONOUS INDUCTION MOTOR**

(30) Priority: 10.02.2015 JP 2015023746
(71) Applicant: Nidec Techno Motor Corporation, Kyoto 601-8205 (JP)
(72) Inventor: HOSHINO, Yoshitada, Kyoto, 601-8205 (JP); EGASHIRA, Junya, Kyoto, 601-8205 (JP); HINO, Kazuya, Kyoto, 601-8205 (JP)
(74) Representative: Zimmermann, Tankred Klaus

(57) **Abstract**

A rotary portion 2 of a synchronous induction motor 1 includes an annular rotor core 31, a secondary conductor 32 and a plurality of permanent magnets 33. The secondary conductor 32 includes a plurality of conductor bars 60 which are provided in secondary conductor slots 311 in the rotor core 31; and a pair of end rings 61, 61 which connect each end of the plurality of conductor bars 60 into an annular shape. The plurality of permanent magnets 33 are respectively provided in magnet slots 312 provided in the rotor core 31. Further, the plurality of permanent magnets 33 are provided such that same pole of the neighboring permanent magnets 33 face each other in a circumferential direction. A magnetic flux of the permanent magnets 33 flows from the permanent magnets 33 toward the circumferential direction, but not the radial direction.

## Description

### Field of the Disclosure

The present disclosure relates to a synchronous induction motor.

### Description of the Related Art

In the past, a synchronous motor which generates a torque by using magnetic force of a permanent magnet, and an induction motor which includes a secondary conductor, instead of a permanent magnet, and generates a torque by using induced current flowing through the secondary conductor have been known. While the synchronous motor is capable of achieving high torque at synchronous speed, a disadvantage is that it is not capable of initiating rotation (self-starting) simply by being connected to an AC power source. Meanwhile, while the induction motor is less efficient when compared to the synchronous motor, an advantage is that it is capable of self-starting from a stopped state.

Therefore, in recent years, a synchronous induction motor, which has the characteristics of both the synchronous motor and the induction motor combined, has been developed. A permanent magnet and a secondary conductor are both incorporated in a rotor of the synchronous induction motor. During start-up, the synchronous induction motor initiates the rotor to rotate by the induced current generated in the secondary conductor, and after synchronous speed is reached, the rotor is rotated by mainly using the magnetic force of the permanent magnet.

A conventional synchronous induction motor is described in, for example, Japanese Patent Application Laid-Open Publication No. 2003-018776.

The synchronous induction motor of Japanese Patent Application Laid-open Publication No. 2003-018776 has a so-called inner rotor type structure in which a rotor is provided on an inner side than a stator. In this inner rotor type structure, a load is attached to the rotor in an axial direction. Therefore, the length of the whole device in the axial direction is increased. Further, in the inner rotor type structure, the rotor has a small diameter. For this reason, in order to obtain a high torque, a permanent magnet with strong magnetic force or a large amount of coils is required.

Meanwhile, when a so-called outer rotor type structure, in which the rotor is provided on an outer side than the stator, is employed, the above-described problem can be resolved. However, a permanent magnet and a secondary conductor still need to be incorporated in the rotor of the synchronous induction motor. For this reason, when the outer rotor type structure is adopted in the synchronous induction motor, sufficient magnetic path cannot be secured in a rotor core, and thereby magnetic flux from the permanent magnet may incur magnetic saturation in the rotor core.

An object of the present disclosure is to suppress the radial dimension of a rotor core in a synchronous induction motor having an outer rotor type structure, and further, to provide a structure that can suppress the occurrence of magnetic saturation in the rotor core.

### Summary of the Disclosure

A first exemplary embodiment according to the present disclosure is a synchronous induction motor, comprising: a stationary portion; and a rotary portion which rotates on a rotation axis. The stationary portion includes a stator which generates magnetic flux in response to a drive current. The rotary portion includes an annular rotor core which is located on a radially outer side of the stator, a secondary conductor formed of a nonmagnetic conductive material, and a plurality of permanent magnets. The rotor core includes a plurality of secondary conductor slots which extend in an axial direction, and a plurality of magnet slots which are circumferentially provided on a radially outer side of the secondary conductor slots, each of the magnet slots extending in the axial direction. The secondary conductor includes a plurality of conductor bars provided in the secondary conductor slots, and a pair of end rings which are provided on both axial end surfaces of the rotor core and connect axial end portions of the plurality of conductor bars with one another so as to form an annular shape. Each of the plurality of permanent magnets is provided respectively in the magnet slots, and the same magnetic poles of the neighboring permanent magnets face each other in the circumferential direction.

According to the first exemplary embodiment of the present disclosure, it is possible to reduce a radial dimension of the rotor core, and to suppress the occurrence of magnetic saturation in the rotor core. The above and other elements, features, steps, characteristics and advantages of the present disclosure will become more apparent from the following detailed description of the preferred embodiments with reference to the attached drawings.

### Brief Description of the Drawings

FIG. 1 is a vertical cross-sectional view of a synchronous induction motor.
FIG. 2 is a top view of a rotor core, a secondary conductor and a plurality of permanent magnets.
FIG. 3 is a cross-sectional view of the rotor core.
FIG. 4 is a partial cross-sectional view of the rotor core, the secondary conductor and the plurality of permanent magnets.
FIG. 5 is a partial vertical cross-sectional view of the motor core, the secondary conductor, the permanent magnets and a first rotor yoke.
FIG. 6 is a partial vertical cross-sectional view of the rotor core, the secondary conductor and the first rotor yoke.
FIG. 7 is an exploded view of the synchronous induction motor.

### Detailed Description of the Preferred Embodiments

Herein, exemplary embodiments of a synchronous induction motor will be explained. Further, herein, a direction parallel to a rotation axis of the synchronous induction motor is referred to as "axial direction," a direction orthogonal to the rotation axis of the synchronous induction motor is referred to as "radial direction," and a direction along a circular arc having its center on a center axis of the synchronous induction motor is referred to as "circumferential direction." Moreover, in this disclosure, the axial direction is also referred to as upper and lower directions, in which a first bearing side with respect to a second bearing is the "upper" direction, and the shapes and positional relations of the elements will be explained based thereon. It is to be understood that this definition of the upper and lower directions is not intended to define a particular direction when the synchronous induction motor is actually manufactured and used.

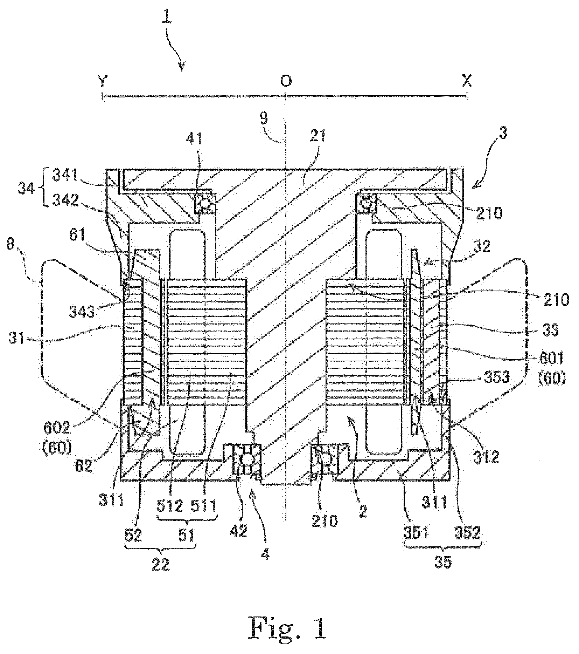

FIG. 1 is a vertical cross-sectional view of a synchronous induction motor 1. The synchronous induction motor 1 uses both the induced current flowing through a secondary conductor 32 and the magnetic flux generated from permanent magnets 33 to generate a torque around a rotation axis 9. This synchronous induction motor 1 is used, for example, to rotate a fan of an indoor air conditioner in an electric train. It is possible for synchronous induction motors which are used for other applications to adopt the same structure. For example, synchronous induction motors having the same structure may be used in a car, consumer electronics, office automation equipment, medical equipment, tools, large industrial facilities, and others, to generate various drive force.

As illustrated in FIG. 1, the synchronous induction motor 1 includes a stationary portion 2, a rotary portion 3 and a bearing mechanism 4. The stationary portion 2 is fixed to a frame of an air conditioner. The rotary portion 3 having its center on the rotation axis 9 is rotated. The bearing mechanism 4 is interposed between the stationary portion 2 and the rotary portion 3, and rotatably supports the rotary portion 3.

The stationary portion 2 includes a shaft 21 and a stator 22.

The shaft 21 is a columnar member which extends in the axial direction on a radially inner side of the stator 22. The shaft 21 is made of, for example, metal such as stainless steel, or the like. An outer diameter of the shaft 21 decreases stepwise from an upper end toward a lower end thereof. That is, the shaft 21 includes a plurality of shaft stepped portions 210 of which outer diameter decreases stepwise from the upper end toward the lower end thereof.

The stator 22 is an armature which generates magnetic flux in response to a drive current. The stator 22 includes a stator core 51 and a plurality of coils 52. The stator core 51 is made of, for example, a laminated steel plate in which electromagnetic steel plates made of magnetic material are stacked in the axial direction. The stator core 51 includes an annular core back 511 and a plurality of teeth 512 which protrude from the core back 511 toward a radially outer side. The core back 511 is fixed to an outer circumferential surface of the shaft 21. The plurality of coils 52 are formed of conductive wires wound around the teeth 512. Further, winding the conductive wires may be performed by using a so-called "concentrated winding," in which the individual conductive wire is wound around each of the teeth 512. It may also be performed by using a so-called "distributed winding", in which the individual conductive wire is wound around over two or more teeth.

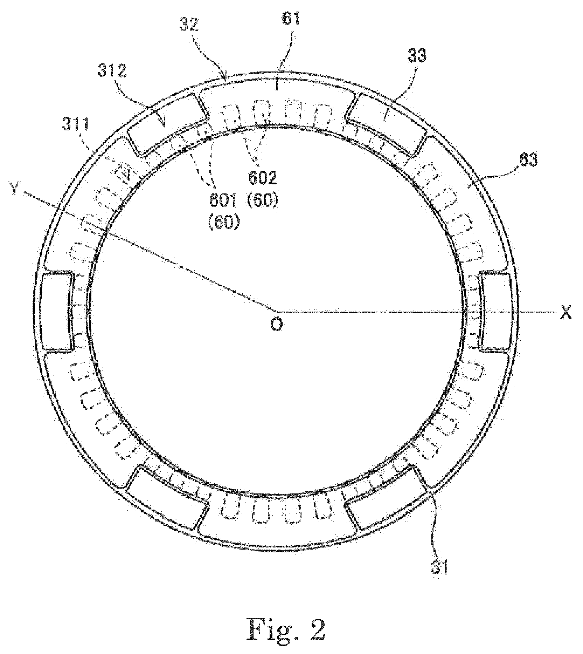

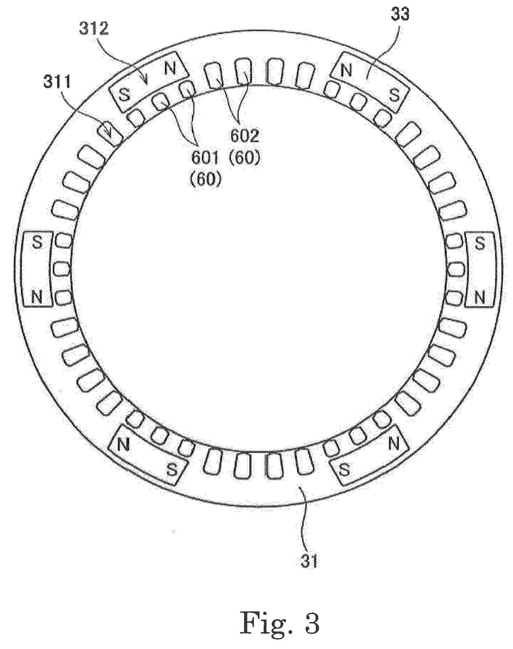

The rotary portion 3 includes a rotor core 31, the secondary conductor 32, the plurality of permanent magnets 33, a first rotor yoke 34 and a second rotor yoke 35. FIG. 2 is a top view of the rotor core 31, the secondary conductor 32 and the plurality of permanent magnets 33. FIG. 3 is a cross-sectional view of the rotor core 31. Further, the vertical cross-sectional view of FIG. 1 corresponds to the cross-sectional view taken along the X-O-Y line in FIG. 2.

The rotor core 31 is an annular member located on a radially outer side of the stator 22. The stator core 51 is made of, for example, a laminated steel plate in which electromagnetic steel plates made of magnetic material are stacked in the axial direction. As illustrated with a broken line in FIG. 1, a load 8, such as an impeller which generates air current, may be attached to a radially outer side of the rotor core 31. Further, as illustrated in FIG. 1 to FIG. 3, the rotor core 31 includes a plurality of secondary conductor slots 311 and a plurality of magnet slots 312. The plurality of secondary conductor slots 311 and the plurality of magnet slots 312 respectively penetrate through the rotor core 31 in the axial direction.

As illustrated in FIG. 2 and FIG. 3, the plurality of secondary conductor slots 311 are provided in a vicinity of an inner circumferential portion of the rotor core 31 and arranged at substantially identical intervals in the circumferential direction. The plurality of magnet slots 312 are provided on a radially outer side than the secondary conductor slots 311 and arranged at substantially identical intervals in the circumferential direction. In this embodiment, there are more numbers of secondary conductor slots 311 than the numbers of magnet slots 312.

The secondary conductor 32 is a conductor which serves as a path of induced current when the synchronous induction motor 1 is driven. The secondary conductor 32 includes a plurality of conductor bars 60, a first end ring 61 and a second end ring 62. The plurality of conductor bars 60 respectively extend in the axial direction within the secondary conductor slots 311. The first end ring 61 is provided on an upper end surface of the rotor core 31 and connects upper end portions of the plurality of conductor bars 60 in an annular shape. The second end ring 62 is provided on a lower end surface of the rotor core 31 and connects lower end portions of the plurality of conductor bars 60 in the annular shape.

An outer edge portion of the upper end surface of the rotor core 31, which is a portion on the radially outer side thereof, is not covered with the first end ring 61. Further, an outer edge portion of the lower end surface of the rotor core 31, which is a portion on the radially outer side thereof, is not covered with the second end ring 62.

The secondary conductor 32 is made of a nonmagnetic conductive material. In this embodiment, the secondary conductor 32 is formed as a single connected body having the plurality of conductor bars 60, the first end ring 61 and the second end ring 62, which is formed by aluminum casting. The secondary conductor 32 may be formed by any other manufacturing methods other than casting. Further, a material other than aluminum may be used for the secondary conductor 32. Furthermore, the secondary conductor 32 may be formed by combining a plurality of members.

The plurality of permanent magnets 33 are respectively inserted into the magnet slots 312 and concurrently fixed to the rotor core 31 by an adhesive. An N pole and an S pole are respectively magnetized on both circumferential end surfaces of the permanent magnets 33. Further, as illustrated in FIG. 3, the adjacent permanent magnets 33 are provided such that same poles of respective permanent magnets face each other in the circumferential direction. Accordingly, by the magnetic flux of the permanent magnets 33, the N pole and the S pole appear alternately in the circumferential direction on the inner circumferential surface of the rotor core 31.

The first rotor yoke 34 is an annular member provided at an upper side of the rotor core 31. The first rotor yoke 34 has a first plate portion 341 and a first cylindrical portion 342. The first plate portion 341 expands in a disc shape on an upper side of the stator 22 and the rotor core 31. The first cylindrical portion 342 extends from an end portion on the radially outer side of the first plate portion 341 toward a lower side. Further, the first rotor yoke 34 has a first rotor yoke stepped portion 343 at a lower end portion of the first cylindrical portion 342. The first rotor yoke stepped portion 343 is an annular notched portion which contacts the corner portion of the boundary between the outer circumferential surface and the upper end surface of the rotor core 31. The two surfaces that form the first rotor yoke stepped portion 343 respectively contact the upper end portion of the outer circumferential surface of the rotor core 31 and the outer edge portion of the upper end surface of the rotor core 31.

The second rotor yoke 35 is an annular member provided at a lower side of the rotor core 31. The second rotor yoke 35 has a second plate portion 351 and a second cylindrical portion 352. The second plate portion 351 expands in a disc shape on a lower side of the stator 22 and the rotor core 31. The second cylindrical portion 352 extends from an end portion on the radially outer side of the second plate portion 351 toward an upper side. Further, the second rotor yoke 35 has a second rotor yoke stepped portion 353 at an upper end portion of the second cylindrical portion 352. The second rotor yoke stepped portion 353 is an annular notched portion which contacts the corner portion of the boundary between the outer circumferential surface and the lower end surface of the rotor core 31. The two surfaces that form the second rotor yoke stepped portion 353 respectively contact the lower end portion of the outer circumferential surface of the rotor core 31 and the outer edge portion of the lower end surface of the rotor core 31.

The bearing mechanism 4 has a first bearing 41 and a second bearing 42. The first bearing 41 is provided at an upper side than the stator 22. Further, the second bearing 42 is provided at a lower side than the stator 22.

A ball bearing having a plurality of spherical bodies between an outer ring and an inner ring is used as the first bearing 41 and the second bearing 42. The outer ring of the first bearing 41 is fixed to an inner circumferential portion of the first plate portion 341 of the first rotor yoke 34. The outer ring of the second bearing 42 is fixed to an inner circumferential portion of the second plate portion 351 of the second rotor yoke 35. Further, each of the inner rings of the first bearing 41 and the second bearing 42 is fixed to an outer circumferential surface of the shaft 21. With this, the first rotor yoke 34 and the second rotor yoke 35 are rotatably supported by the shaft 21.

Instead of the ball bearing, other types of bearing such as a sliding bearing a liquid bearing, or the like, may be used.

When the synchronous induction motor is driven, drive current is supplied to the coils 52 from an external power source via a driving circuit. Then, a magnetic flux is generated in the plurality of teeth 512 of the stator core 51. Then, by this magnetic flux, the induced current flows through the plurality of conductor bars 60 so that a torque in the circumferential direction is generated in the plurality of conductor bars 60. With this, the rotary portion 3 starts to rotate on the rotation axis 9. Further, when the rotary portion 3 begins to rotate, a torque in the circumferential direction is also generated between the teeth 512 and the permanent magnets by an action exerted by each other's magnetic flux. As a result, the rotary portion 3 rotates efficiently on the rotation axis 9.

Especially, in this synchronous induction motor 1, the first bearing 41 and the second bearing 42 are respectively provided at the upper side and the lower side of the stator 22. It is therefore possible to suppress the tilting of the rotary portion 3 with respect to the rotation axis 9 when compared to a case in which the bearing is disposed only on one of the upper side or the lower side of the stator 22. Therefore, it is possible to reduce a radial gap between the stator 22 and the rotor core 31, and moreover, to prevent the stator 22 and the rotor core 31 from contacting each other when the synchronous induction motor 1 is driven. With this, it is possible to increase the efficiency of the synchronous induction motor 1.

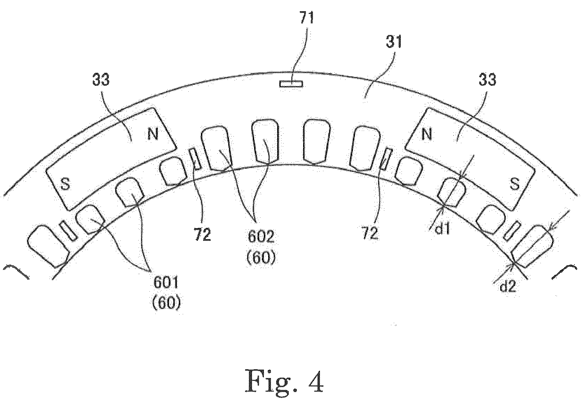

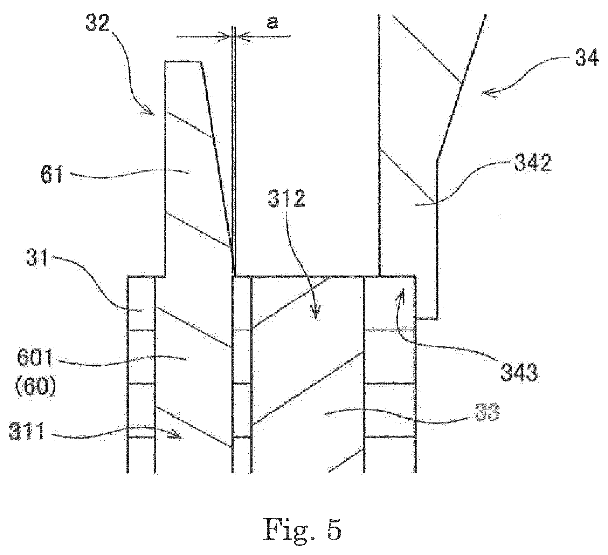

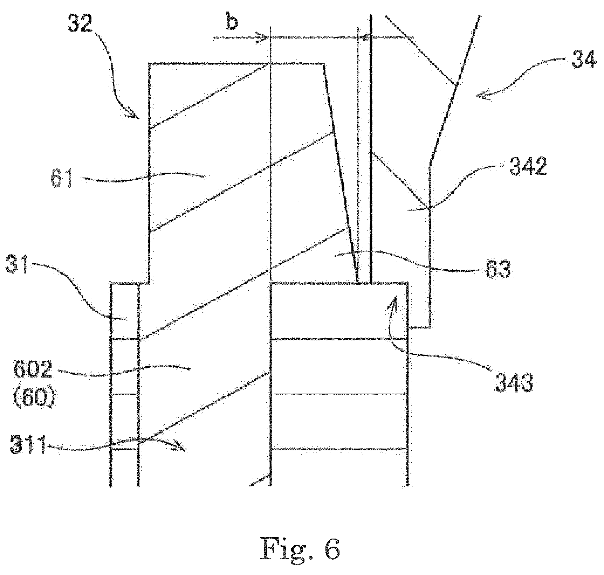

Herein, a detailed structure of the rotary portion 3 will be described. FIG. 4 is a partial cross-sectional view of the rotor core 31, the secondary conductor 32 and the plurality of permanent magnets 33. FIG. 5 is a partial vertical cross-sectional view of the rotor core 31, the secondary conductor 32, the permanent magnets 33 and the first rotor yoke 34 taken along the O-X line shown in FIG. 2. FIG. 6 is a partial vertical cross-sectional view of the rotor core 31, the secondary conductor 32 and the first rotor yoke 34 taken along the O-Y line shown in FIG. 2.

As described above, in the synchronous induction motor 1, both end surfaces in the circumferential direction of the permanent magnets 33 become magnetic pole surfaces. And each set of neighboring permanent magnets 33 is provided such that the same poles of the respective permanent magnets 33 face each other in the circumferential direction. Therefore, a magnetic flux of the permanent magnets 33 flows from the permanent magnets 33 to the circumferential direction, not the radial direction. For this reason, even if a radially inner side portion and a radially outer side portion of the rotor core 31 are thinner than the permanent magnets 33, magnetic saturation is unlikely to occur in the rotor core if a sufficient gap exists between each set of neighboring permanent magnets 33. Therefore, when the structure according to the present disclosure is adopted, it is possible to suppress the radial dimension of the rotor core 31, and moreover, to suppress the occurrence of magnetic saturation in the rotor core 31.

Especially, in this synchronous induction motor 1, a circumferential gap between the neighboring permanent magnets 33 is larger than a circumferential width of the permanent margent 33. With respect to the size of the permanent magnets 33, if the circumferential gap between each set of neighboring permanent magnets 33 is enlarged, it is possible to further suppress the occurrence of magnetic saturation in the rotor core 31. The circumferential gap between the neighboring permanent magnets 33 may be changed depending on the magnetic characteristic and the axial length of the permanent magnets 33. Therefore, the circumferential gap between the neighboring permanent magnets 33 may be equal to or smaller than the circumferential width of each of the permanent magnets 33.

As illustrated in FIG. 4, the plurality of conductor bars 60 include a plurality of first conductor bars 601 and a plurality of second conductor bars 602. The plurality of first conductor bars 601 are provided on a radially inner side of the permanent magnets 33, and further, disposed to a radially overlapping position with the permanent magnets 33. The plurality of second conductor bars 602 are provided to a position which does not overlap with the permanent magnets 33 in the radial direction, that is, the plurality of second conductor bars are disposed to a circumferential position between the plurality of permanent magnets 33.

The radially inner side end portions of the first conductor bars 601 and the radially inner side end portions of the second conductor bars 602 are arranged in substantially the same radial positions. Meanwhile, the radially outer side end portions of the second conductor bars 602 are provided at a radially outer side than the radially outer side end portions of the first conductor bars 601 and the radially inner side surfaces of the permanents magnets 33. Therefore, a radial dimension d1 of each of the first conductor bars 601 is shorter than a radial dimension d2 of each of the second conductor bars 602.

As described above, in the synchronous induction motor 1, the first conductor bars 601 having a smaller radial dimension than that of the second conductor bars 602 are provided at a radially overlapping position with the permanent magnets 33. Accordingly, it is possible to suppress the radial dimension of the rotor core 31. Meanwhile, the second conductor bars 602 having a larger radial dimension than that of the first conductor bars 601 are provided at a position that does not radially overlap with the permanent magnets 33. Therefore, it is possible to increase a starting torque generated by the induced current.

The conductor bars 60 and the permanent magnets 33 are provided at positions apart from each other. Specifically, the first conductor bars 601 and the permanent magnets 33 are provided at positions spaced apart from each other in the radial direction. Further, the second conductor bars 602 and the permanent magnets 33 are provided at positions spaced apart from each other in the circumferential direction. With this, it is possible to prevent the magnetic flux generated by induced current flowing through the conductor bars 60 from being inhibited in the permanent magnets 33. Therefore, it is possible to further increase the starting torque generated by the induced current.

As illustrated in FIG. 2, FIG. 5 and FIG. 6, the first end ring 61 is provided on the upper end surface of the rotor core 31. Upper end openings of the plurality of magnet slots 312 are not covered with the first end ring 61. That is, the first end ring 61 at least partially covers the upper end surface of the rotor core 31 except for the magnet slots 312. Accordingly, the upper end surfaces of the permanent magnets 33 are exposed through the first end ring 61.

Further, the second end ring 62 at least partially covers the lower end surface of the rotor core 31 except for the magnet slots 312 in the same manner as the first end ring 61. Therefore, the lower end surfaces of the permanent magnets 33 are exposed through the second end ring 62.

In a case in which at least the first end ring 61 and the second end ring 62 within the secondary conductor 32 are casted articles, and the permanent magnets 33 are inserted into the magnet slots 312 before casting, magnetic force of the permanent magnets 33 may be reduced by the heat generated at the time of performing the casting. However, in this synchronous induction motor 1, it is possible to insert the permanent magnets 33 into the magnet slots 312 after the casting of the first end ring 61 and the second end ring 62 is performed. Accordingly, it is possible to prevent the magnetic force of the permanent magnets 33 from being reduced by the heat at the time of casting.

Furthermore, as illustrated in FIG. 2 and FIG. 6, the first end ring 61 includes a plurality of protrusion portions 63 protruding toward a radially outer side, in a circumferential range where the permanent magnets 33 do not exist. Further, the second end ring 62 includes a plurality of protrusion portions 63 in the same manner. Each of the protrusion portions 63 expands further to a radially outer side than the radially inner side surface of the permanent magnets 33.

Here, as illustrated in FIG. 5, in a circumferential range where the permanent magnets 33 exist, a radial length of the first end ring 61 provided at a radially outer side than the secondary conductor slots 311 is referred to as "a". Furthermore, as illustrated in FIG. 6, in a circumferential range where the permanent magnets 33 do not exist, a radial length of the first end ring 61 provided at a radially outer side than the secondary conductor slots 311 is referred to as "b". In this synchronous induction motor 1, a relation of "a < b" is satisfied. Further, in the second end ring 62, a relation of "a < b" is also satisfied in the same manner.

When the first end ring 61 and the second end ring 62 are provided with the protrusion portions 63 in the circumferential range where the permanent magnets 33 do not exist as described above, electric resistance of the secondary conductor 32 can be reduced, when compared to a case where the protrusion portions 63 are not provided. Therefore, at the time of starting the synchronous induction motor 1, the induced current flowing through the secondary conductor 32 can be increased. Moreover, it is possible to suppress the occurrence of a lifting of the plurality of electromagnetic steel plates defining the rotor core 31 which may occur in the vicinity of the outer circumferential portion.

Further, the rotor core 31 includes a plurality of first caulking portions 71 and a plurality of second caulking portions 72. The plurality of electromagnetic steel plates are plastically deformed in the axial direction, in the first caulking portions 71 and the second caulking portions 72. As a result, the plurality of electromagnetic steel plates are fixed to each other.

The plurality of first caulking portions 71 prevent the plurality of electromagnetic steel plates from being separated from each other in the vicinity of the outer circumferential portion of the rotor core 31. In an example shown in FIG. 4, the first caulking portions 71 are provided at the substantial center between the neighboring permanent magnets 33 in the circumferential direction. Further, the first caulking portions 71 are provided on a radially outer side than the radially inner side surface of the permanent magnets 33. In said position, the amount of magnetic flux directed from the permanent magnets 33 to the stator 22 is small. For this reason, even if the first caulking portions 71 are provided in said position, the magnetic property is unlikely to be affected.

The plurality of second caulking portions 72 prevent the plurality of electromagnetic steel plates from being separated from each other in the vicinity of the inner circumferential portion of the rotor core 31. In an example shown in FIG. 4, the second caulking portions 72 are provided at the substantial center between the first conductor bars 601 and the second conductor bars 602 in the circumferential direction. Further, the second caulking portions 72 are provided on a radially inner side than the radially inner side surface of the permanent magnets 33. In said position, the amount of magnetic flux directed from the permanent magnets 33 to the stator 22 is small. For this reason, even if the first caulking portions 71 are provided in said position, the magnetic property is unlikely to be affected.

Furthermore, the second caulking portions 72 may be provided between the plurality of first conductor bars 601 in the circumferential direction.

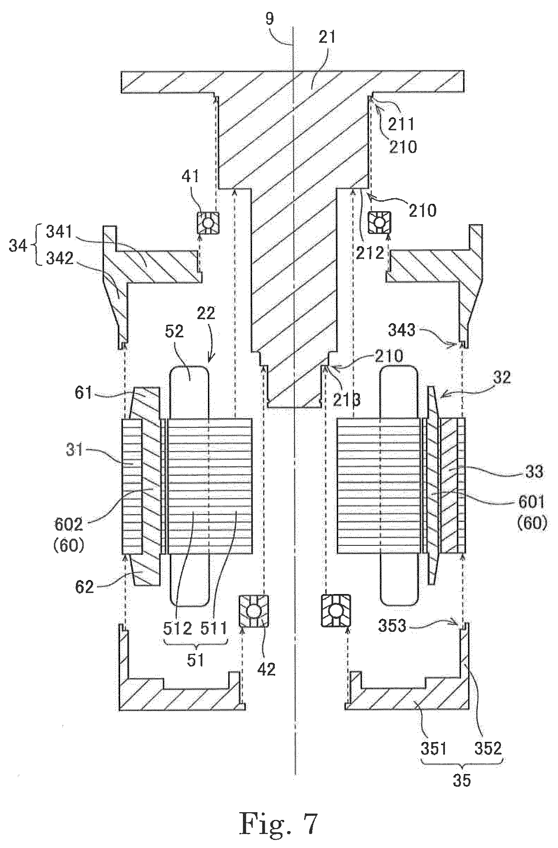

Continuously, assembling of the synchronous induction motor 1 will be described. FIG. 7 is an exploded view of the synchronous induction motor 1. Here, the stator 22 having the stator core 51 and the coils 52 is prepared in advance. Further, the secondary conductor 32 is casted in the rotor core 31, and each of the permanent magnets 33 is inserted into the plurality of magnet slots 312 of the rotor core 31.

When assembling the synchronous induction motor 1, as illustrated with a broken-lined arrow in FIG. 7, first, the first bearing 41, the first rotor yoke 34, and the rotor core 31 approaches the shaft 21 upwardly from a lower side, in said order. Continuously, the stator 22 and the second bearing 42 approach the shaft 21 upwardly from the lower side, in said order. Finally, the second rotor yoke 35 approaches upwardly from the lower side.

Here, the upper end surface of the inner ring of the first bearing 41, the top surface of the core back 511 of the stator core 51 and the upper end surface of the inner ring of the second bearing 42 are respectively in contact with a surface facing the lower side of the shaft stepped portion 210. The three shaft stepped portions 210 of the shaft 21 thus respectively have a contact surface 211 which is in contact with the upper end surface of the inner ring of the first bearing 41; a contact surface 212 which is in contact with the top surface of the core back 511 of the stator core 51; and a contact surface 213 which is in contact with the upper end surface of the inner ring of the second bearing 42. Each of the contact surfaces 211, 212, 213 is an annular surface which vertically expands along the rotation axis 9. The axial positions of the first bearing 41, the stator 22 and the second bearing 42 are determined by these contact surfaces 211, 212, 213.

Furthermore, in this synchronous induction motor 1, an outer diameter of the shaft 21 becomes smaller from the upper end toward the lower end. For this reason, the synchronous induction motor 1 is assembled having all of the first bearing 41, the first rotor yoke 34, the rotor core 31, the stator 22, the second bearing 42 and the second rotor yoke 35 approach the shaft 21 upwardly from the lower side. As a result, a workload at the time of assembling the synchronous induction motor 1 is reduced.

When the outer diameter of the shaft 21 is decreased toward the lower side, a moment of force on the portion from the second bearing 42 to a radially outer side of the second rotor yoke 35 is increased, and thereby a great load is applied to the second bearing 42. For this reason, in this synchronous induction motor 1, a bigger bearing is used for the second bearing 42 as compared with the first bearing 41. Specifically, the axial dimension of the second bearing 42 is bigger than the axial dimension of the first bearing. Further, the axial dimension of the second bearing 42 is bigger than the radial dimension of the first bearing 41. With this, even if a big load is applied to the second bearing 42, it is possible to maintain rigidity of the bearing. Accordingly, it is possible to prevent the rotary portion 3 from contacting the shaft 21 in the vicinity of the lower portion thereof.

The rotor core 31 is interposed between the first rotor yoke 34 and the second rotor yoke 35 in the axial direction. With this, the axial position of the rotor core 31 is determined. Especially, in this synchronous induction motor 1, the first rotor yoke 34 includes the first rotor yoke stepped portion 343 and the second rotor yoke 35 includes the second rotor yoke stepped portion 353. Further, as described above, these stepped portions 343 and 353 are in contact with the rotor core 31. Accordingly, the first rotor yoke 34, the rotor core 31 and the second rotor yoke 35 can be fixed while the relative positions thereof are easily determined.

Further, the first rotor yoke stepped portion 343 and the second rotor yoke stepped portion 353 are fixed to the rotor core 31 by, for example, means such as an adhesive or welding, and the like.

While the first exemplary embodiment of the synchronous induction motor has been described above, the structure and assembling method of the synchronous induction motor are not limited thereto.

For example, in the first exemplary embodiment, the inner ring of the first bearing 41, the stator core 51 and the second bearing 42 are all in contact with a surface facing the lower side of the shaft stepped portion 210. However, not all of the inner ring of the first bearing 41, the stator core 51 and the second bearing 42 may be in contact with the surface facing the lower side of the shaft stepped portion 210.

Furthermore, in the first exemplary embodiment, the plurality of conductor bars 60 extends in the axial direction. However, the plurality of conductor bars 60 may extend obliquely relative to the axial direction. Moreover, in the first exemplary embodiment, the cross-sectional shape of the conductor bars 60 is a substantially trapezoidal shape having round corners. However, the cross-sectional shape of the conductor bars 60 may be circular or rectangular.

The present disclosure can be used, for example, in a synchronous induction motor.

Features of the above-described preferred embodiments and the modifications thereof may be combined appropriately as long as no conflict arises. While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A synchronous induction motor 1, comprising:
a stationary portion 2; and
a rotary portion 3, which rotates on a rotation axis 9,
the stationary portion 2 including a stator 22 which generates magnetic flux in response to driving current,
wherein the rotary portion 3 includes:
an annular rotor core 31 which is located on a radially outer side of the stator 22;
a secondary conductor 32 formed of a nonmagnetic conductive material; and
a plurality of permanent magnets 33,
the rotor core 31 includes:
a plurality of secondary conductor slots 311 which extend in an axial direction; and
a plurality of magnet slots 312 which are circumferentially provided on a radially outer side than the secondary conductor slots 311 and each of which extends in the axial direction,
the secondary conductor 32 includes:
a plurality of conductor bars 60 provided in the secondary conductor slots 311; and
a pair of end rings 61, 62 which are provided on both axial end surfaces of the rotor core 31 and connect axial end portions of the plurality of conductor bars 60 in an annular shape, and
the plurality of permanent magnets 33 are respectively provided in the magnet slots 312 and the neighboring permanent magnets 33 are provided such that same poles of the respective permanent magnets face each other in the circumferential direction.

2. The synchronous induction motor 1 of claim 1,
wherein the conductor bars 60 and the permanent magnets 33 are positioned separately in the radial direction or in the circumferential direction.

3. The synchronous induction motor 1 of claim 1 or 2,
wherein, in the secondary conductor 32, at least the end rings 61, 62 are cast articles, and
the end rings at least partially cover the upper end surface of the rotor core 31 in the axial direction except for the magnet slots 312 of the rotor core 31, and
axial end portions of the permanent magnets 33 are exposed through the end rings 61, 62.

4. The synchronous induction motor 1 of claim 3,
Wherein, in a circumferential range where the permanent magnets 33 do not exist, the end rings 61, 62 expand to a radially outer side than a radially inner side surface of the permanent magnets 33.

5. The synchronous induction motor 1 of claim 4,
wherein, when a radial length of the end rings 61, 62 provided on a radially outer side than the secondary conductor slots 311 in a circumferential range where the permanent magnets 33 exist, is referred to as "a," and a radial length of the end rings 61, 62 provided on a radially outer side than the secondary conductor slots 311 in a circumferential range where the permanent magnets 33 do not exist, is referred to as "b," the relation of "a < b" is satisfied.

6. The synchronous induction motor 1 of any one of claims 1 to 5,
wherein a circumferential gap between neighboring permanent magnets 33 is bigger than a circumferential width of each of the permanent magnets.

7. The synchronous induction motor 1 of any one of claims 1 to 6,
wherein the plurality of conductor bars 60 include a plurality of first conductor bars 601 which radially overlap with the permanent magnets 33, and a plurality of second conductor bars 602 which do not overlap with the permanent magnets 33, and
a radial dimension of each of the first conductor bars 601 is shorter than that of each of the second conductor bars 602.

8. The synchronous induction motor 1 of claim 7,
wherein the rotor core 31 is a laminated steel plate in which a plurality of electromagnetic steel plates are stacked in the axial direction, the laminated steel plate including a plurality of caulking portions 71, 72 which fix the plurality of electromagnetic steel plates with each other, and
the caulking portions 71 and 72 are provided among the plurality of fist conductor bars 601 in the circumferential direction or between the first conductor bars 601 and the second conductor bars 602 in the circumferential direction.

9. The synchronous induction motor 1 of any one of claims 1 to 7,
wherein the rotor core 31 is a laminated steel plate in which a plurality of electromagnetic steel plates are stacked in the axial direction, the laminated steel plate including a plurality of caulking portions 71, 72 which fix the plurality of electrical steel plates with each other, and
the plurality of caulking portions 71, 72 are provided on a radially outer side of the permanent magnets 33 than a radially inner side of the permanent magnets 33 or about at a center of the neighboring permanent magnets 33 in the circumferential direction.

10. The synchronous induction motor 1 of any one of claims 1 to 9,
wherein the synchronous induction motor 1 includes a first bearing 41 and a second bearing 42 interposed between the stationary portion 2 and the rotary portion 3,
the first bearing 41 is provided on one axial side of the stator 22, and
the second bearing 42 is provided on the other axial side of the stator 22.

11. The synchronous induction motor 1 of claim 10,
wherein the stationary portion 2 includes a shaft 21 having a plurality of shaft stepped portions 210 which are provided on a radially inner side of the stator 22 and extend in the axial direction, and of which an outer diameter is gradually decreased stepwise from one axial side toward the other axial side,
the shaft stepped portions 210 include annular contact surfaces 211, 212, 213 which vertically extend along the rotation axis 9, and
at least one of the first bearing 41, the stator 22 and the second bearing 42 is in contact with the contact surfaces 211, 212, 213.

12. The synchronous induction motor 1 of claim 11,
wherein an axial dimension of the second bearing 42 is bigger than an axial dimension of the first bearing 41, and
an axial dimension of the second bearing 42 is bigger than a radial dimension of the first bearing 41.

13. The synchronous induction motor 1 of any one of claims 1 to 12,
wherein the rotary portion 3 further includes a pair of rotor yokes 34, 35 interposing the rotor core 31 in the axial direction, and
both axial ends of the rotor core 31has an edge portion where the end rings 61, 62 are not covered, and the pair of rotor yokes 34, 35 includes a rotor yoke stepped portion 343 which contacts an outer circumferential surface of the rotor core 31 and the edge portion.
